# EUROPEAN PATENT APPLICATION

(11) **EP 2 730 394 A1**
(43) Date of publication of application: **14.05.2014**
(21) Application number: 12191825.4
(22) Date of filing: 08.11.2012
(51) Int. Cl.: B29C 67/00, G06T 17/00, B32B 38/18, B32B 37/12

(54) **Method and apparatus for producing models**

(71) Applicant: ROYAL COLLEGE OF ART, London SW7 2EU (GB)
(72) Inventor: Grace, Nick, London, EC1V 9NT (GB); Russell, James, Harrow, HA2 6JN (GB)
(74) Representative: Fennell, Gareth Charles

(57) **Abstract**

The invention provides a method and apparatus for producing a 3D model. According to the invention, a surface map creator creates a digital surface map of a 3D object, and a digital slicing system responsive to an output from the surface map creator generates digital layer objects representing slices through the 3D object. The digital layer objects include data representing markers for designating the relationship and orientation of the slices with respect to one another. Based on the digital layer objects, the apparatus produces a set of slice forming instructions for controlling a slicing machine, and then provides a control output derived from the instructions for supply to the slicing machine.

## Description

This invention concerns a method and apparatus for producing models, especially for producing 3-dimensional (3D) models.

The method has application both in the production of digital models for the control of production machinery to create a physical model, and in the production of physical models directly.

The use of computer aided design techniques is well known for the computer generation of display images and models, for example in the automotive industry for creating vehicle designs and models.

The invention seeks to provide a novel model building process, including the application of computer aided design techniques. Preferably, the invention employs such techniques as an interactive function controlling the actual process of production and manufacture.

The invention, according to a preferred embodiment, provides a method for producing a 3D model, comprising the steps of: creating a digital surface map of a 3D object, based on the digital surface map generating digital layer objects representing slices through the 3D object, the digital layer objects including data representing markers for designating the relationship of the slices with respect to one another, based on the digital layer objects producing a set of instructions for controlling a slicing machine, and providing a control output derived from the instructions for supply to the slicing machine.

The step of generating advantageously comprises inputting control variables relating to the final 3D model and/or relating to stock material from which a physical version of the model will be produced, and combining such variables with the digital surface map for producing a virtual model. The step of generating may also comprise the step of forming slices through the virtual model to produce the digital layer objects.

The invention, according to the preferred embodiment, also provides apparatus for producing a 3D model comprising: a surface map creator for creating a digital surface map of a 3D object, and a digital slicing system responsive to an output from the surface map creator for generating digital layer objects representing slices through the 3D object, the digital layer objects including data representing markers for orienting individual slices with respect to one another, the digital slicing system being adapted for producing slice forming instructions based on the digital layer objects for controlling a slice forming machine and providing a control output derived from said instructions.

The invention, according to the preferred embodiment, also provides a method for producing a physical 3D model, comprising the steps of: inputting control data to a slice forming machine for producing slices in sheet form, controlling a slice forming machine according to the control data to produce a series of slices representing successive layers of the 3D model and to provide on respective slices markers for locating and orienting adjacent slices with respect to one another, assembling the slices by successively mounting the slices in the order of the successive layers on a support column, and orientating the slices relative to one another by reference to the location markers.

The step of controlling may, by way of example, comprise controlling a cutting machine to cut slices from sheet stock material. For example, the cutting may be effected by one of the following: laser cutting, water jet cutting, heat slicing, sawing.

The invention will be described further, by way of example, with reference to the accompanying drawings, in which:
Figure 1 is a schematic view of a digital surface map of a three-dimensional (3D) object that is in the form of a human head;
Figure 2 is a representation of the 3D object as a series of digital layer objects;
Figure 3 is a schematic representation of a series of slices corresponding with the layer objects shown in Figure 2;
Figure 4A is a completed 3D model assembled from physical slices such as those represented in Figure 3, and Figure 4B is a further view of the completed 3D model with parts cut away showing a support structure for the slices;
Figure 5 is a schematic block diagram of a model producing system for producing slicing instructions for a cutting machine for cutting the slices shown in Figure 3 for producing the model shown in Figure 4;
Figure 6 is a schematic block diagram of a surface map creator shown in Figure 5;
Figure 7 is a schematic block diagram of a cutting machine control unit arranged to receive instructions from the system shown in Figure 5;
Figure 8 is a schematic diagram of a cutting machine controlled by the control unit of Figure 7 for cutting slices from sheet stock material for assembly into the physical 3D model of Figure 4;
Figure 9 is a flow diagram of the steps performed in the surface map creator of Figures 5 and 6;
Figure 10 is a flow diagram of the steps performed in a generator shown in Figure 5 in determining amongst sets of variables certain specific parameters to be employed for the physical 3D model;
Figure 11 is a flow diagram of steps performed in a slicing computer aided design apparatus of Figure 5 in generating initial layer data for defining digital layer objects representing individual slices of the physical 3D model;
Figure 12 is a flow diagram representing further steps performed in the slicing computer aided design apparatus for generating a visual representation from the initial layer data obtained by the process of Figure 11 and for generating control data as output;
Figure 13 is a flow diagram of the steps performed in the slicing computer aided design apparatus for converting the control data into cutting layout instructions for supply to the cutting machine of Figures 7 and 8 for producing a series of slices, such as those illustrated in Figure 3 for creating the physical model of Figure 4; and
Figure 14 is a diagram of a further, more complex, physical 3D model generated by the method and system of Figures 1 to 13.

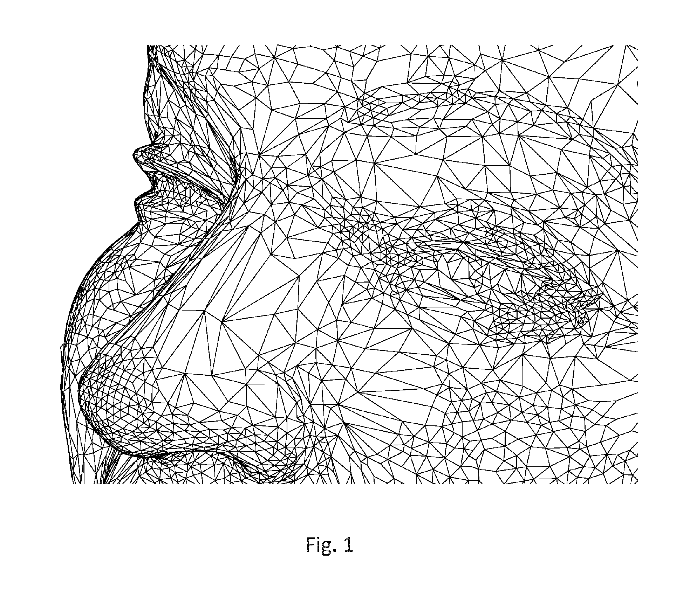

The basic steps involved in the production of 3D models according to an embodiment of the invention will first be described by way of illustration with reference to Figures 1 to 4 showing different stages of the inventive process for producing a representation of a 3D object and converting that representation by stages into a final physical 3D model.

The 3D object to be converted into a 3D physical model in the present example is a human head. Figure 1 is a digital image, showing the surface contours of a portion of the human head, from which a surface map is being created by rendering the contoured surface as a triangulated mesh representation.

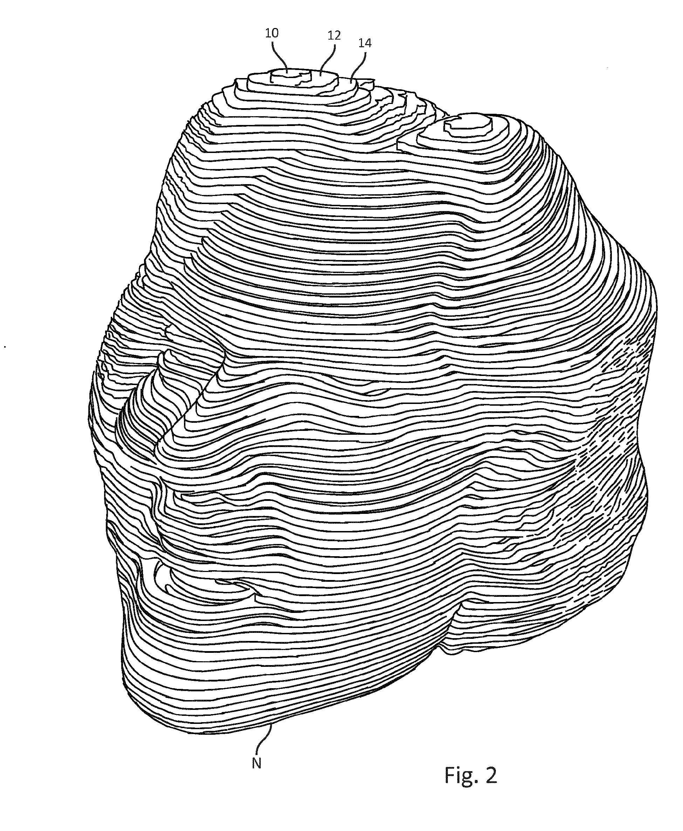

This triangulated mesh representation is employed to generate a further digital representation of the head, shown in Figure 2 as a series of digital layer objects built up one upon the other and shaped and dimensioned to recreate the contours of the head. Each layer object has a vertical peripheral edge to assist the later cutting process, and this is in contrast with the sloping contours of the surface map of Figure 1. Fine adjustment may be achieved by displaying the digital representation on an interactive display, and by manually or otherwise feeding in and observing adjustments, until the desired result is achieved visually.

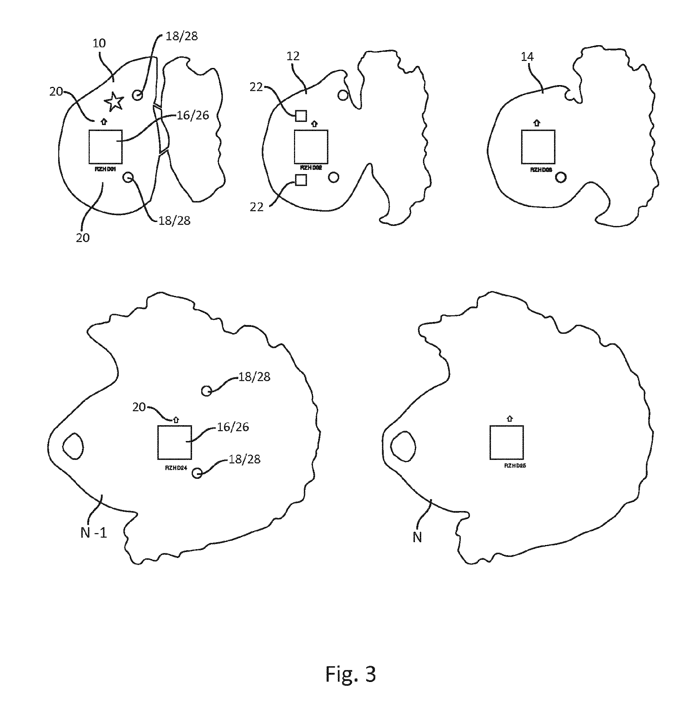

The digital representation of the head shown in Figure 2 is employed to generate detailed outlines and assembly markings for a series of individual physical slices 10, 12, 14 ... N-1, N, as shown in Figure 3. Each of these slices has an outline corresponding to the outline of the associated layer object in the representation in Figure 2, as well as a set of location markers 16, 18, 20, to be described in greater detail below, indicating the positioning and orientation of each slice with respect to adjacent slices in the eventual physical 3D model.

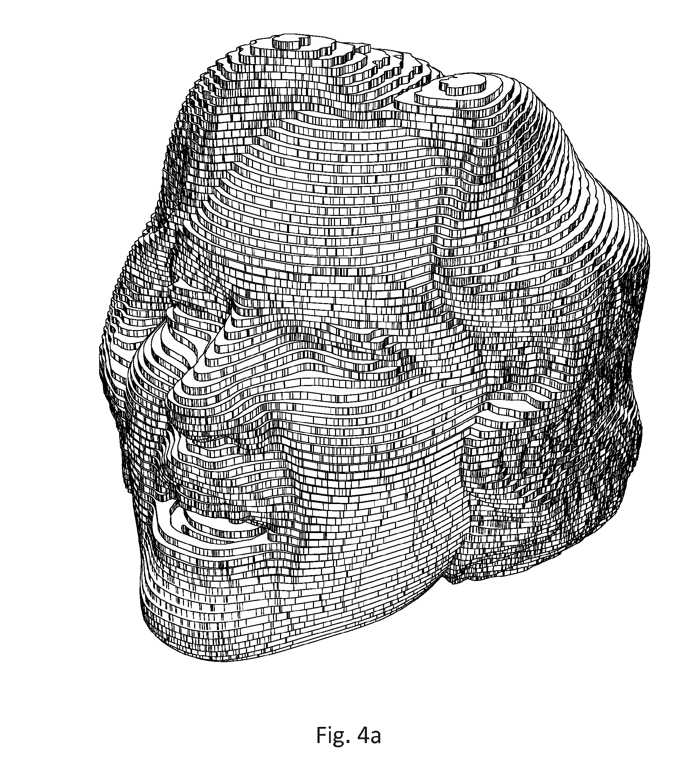

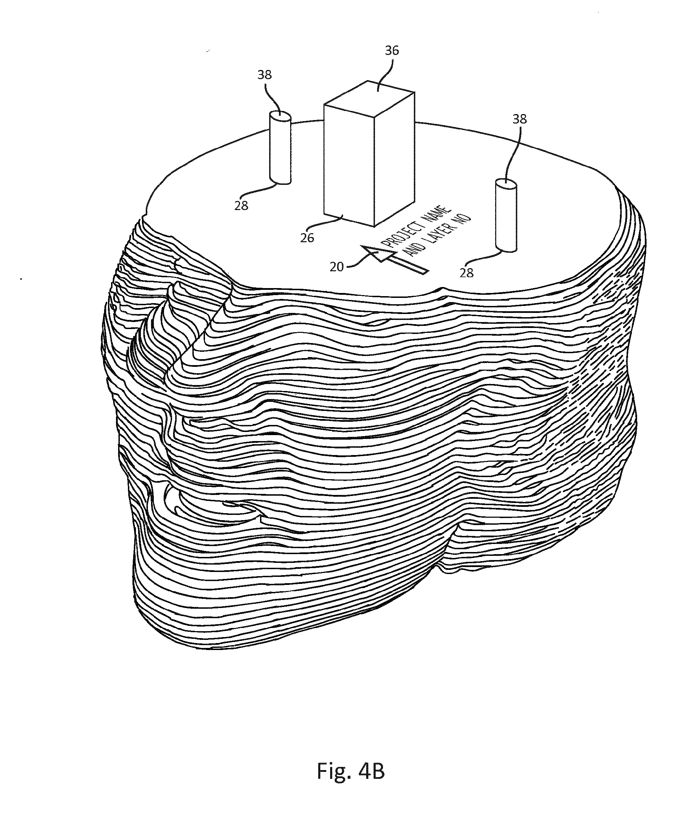

The slices shown in Figure 3 are initially created as respective digital layer objects within an electronic system for generating slice control data, are then formed into a digital layout design representing a layout of cutting shapes with respect to sheet material, and are finally converted into instructions for controlling a slice forming or cutting apparatus for forming physical slices for producing a physical 3D model. A series of the physical slices 10, 12, 14 etc as shown in Figure 3 is produced by such cutting apparatus, having openings 26, 28 formed therein corresponding to the location markers 16, 18. The slices are then assembled onto physical supports, with the aid of the openings 26, 28 and the location markers 20 illustrated in Figure 3, to produce a physical model 22 of the human head as shown in Figures 4A and 4B.

The physical head 22 is shown in Figure 4A to comprise the series of physical slices 10, 12, 14 etc stacked one on top of the other, as illustrated. The location of the slices with respect to one another is achieved by assembling the slices serially onto a plurality of physical supports, comprising a main support column 36 of square section, extending from bottom to top of the physical model 22 through the square openings 26, and a pair of shorter circular rods 38 extending through the openings 28 and serving to further locate certain of the physical slices 10, 12 ...N-1 with respect to one another, as shown in Figure 4B. The assembly process is assisted by reference to the location markers 20, which comprise arrows showing the grain direction of the physical slice material.

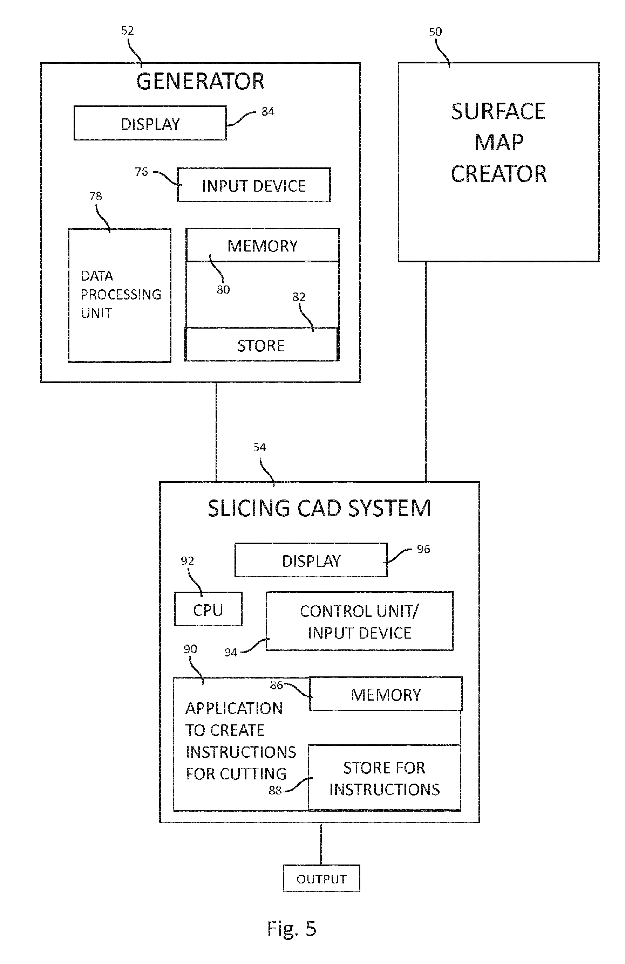

The overall process is described in greater detail below with reference to Figures 5 to 13, and further reference will be made to Figures 1 to 4 in the course of such description. Turning now to Figure 5, a model producing system for producing the 3D model of Figure 4 will be described.

As shown in Figure 5, the electronic elements of this model producing system essentially comprise a surface map creator 50 for producing a digital surface map, such as the triangulated mesh representation of Figure 1, of a basic 3D object. The system also comprises a generator 52 for the input of generalised variables relating to the ultimate 3D model, such as total model height, and basic material properties of the stock material from which the model will be assembled, including for example, sheet material and thickness, grain direction etc, as well as transformations relative to the original model, such as twist or shear. The generator 32 serves for generating a text based set of instructions designed as a template particular to one class of model, one material batch and one class of surface map. Finally, the system includes a slicing computer aided design (CAD) unit 54 for combining the instructions from the generator 52 with the surface map from the surface map creator 50 for producing as output control data and/or instructions for controlling a slice forming apparatus, such as a cutting machine or moulding machine, to produce physical slices, such as those shown in Figure 3 from which the ultimate 3D model of Figure 4 will be assembled. The slicing CAD unit 54 receives data from the surface map creator 50 and the generator 52 for this purpose.

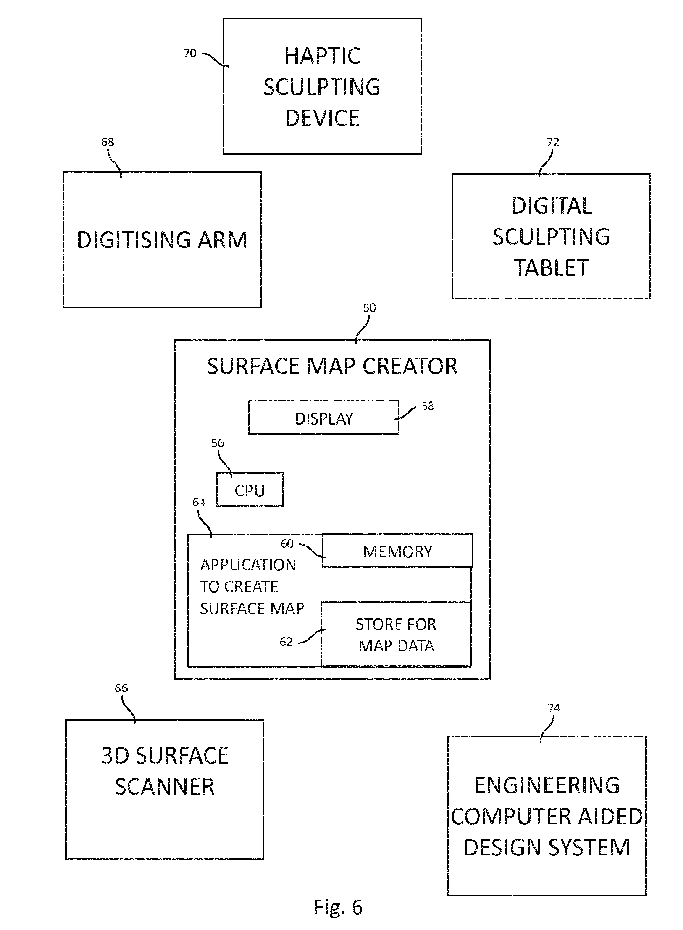

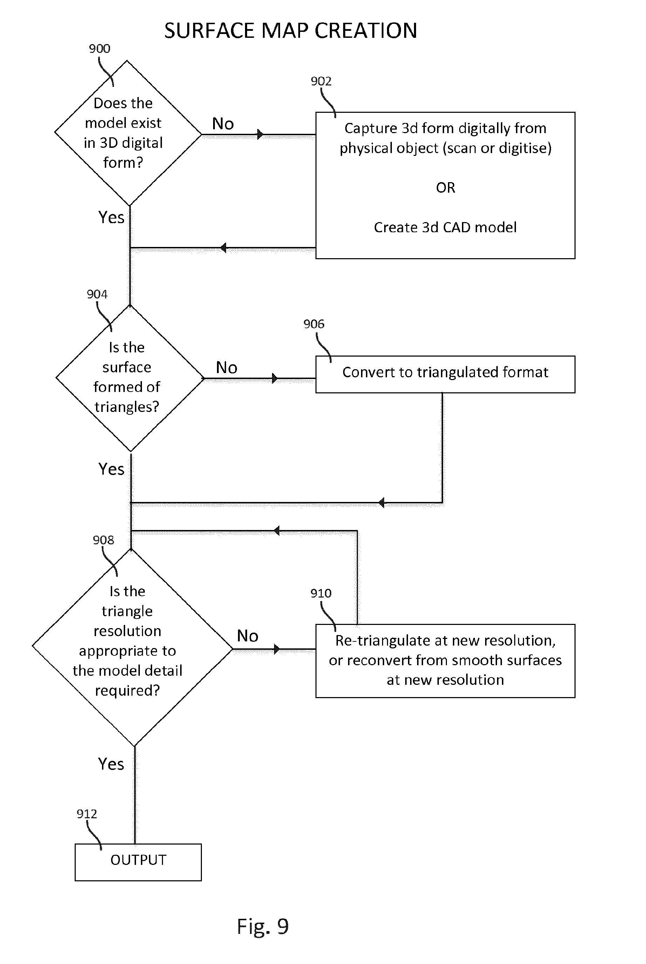

The surface map creator 50 is shown in greater detail in Figure 6 and a flow diagram of the steps involved in the digital surface map creation is shown in Figure 9.

As shown in Figure 6, the surface map creator 50 comprises a CPU 56, a display 58 and a memory 60. The memory 60 includes a data store 62 and an application 64 for creating a digital surface map of the 3D object, as designated by the nodes of the triangulated mesh representation shown in Figure 1.

The surface map creator 50 initially determines whether the 3D object from which the ultimate 3D physical model is to be produced exists currently as a physical object or a virtual object. If the object exists as a physical 3D object, then one of a 3D surface scanner 66 or a digitizing arm 68 is employed to trace the surface of the object and generate a virtual representation for storing in the memory 60 of the surface map creator 50. On the other hand, if the object already exists as a virtual (i.e. digital) object in template form, then the template may be adapted to produce a specific variation of the object by means of one of a haptic sculpting device 70 and a digital sculpting tablet 72. A further possibility is to employ a computer aided design system 74 to generate a CAD object as an initial starting point.

It is to be appreciated that each of the 3D surface scanner 66, the digitizing arm 68, the haptic sculpting device 70, the digital sculpting tablet 72 and the CAD system 74 is in themselves a known device and therefore requires no further description.

Accordingly, a digital representation of a 3D object is created by one of these techniques and is stored in the data store 62 of the memory 60 within the surface map creator 50.

The application 64 thereafter creates a digital surface map of the 3D object, either out of the virtual representation in the store 62 and/or in co-operation with one of the devices 66 to 74. For this purpose, the CPU 56 in the surface map creator 50 performs steps according to the application 64 to generate the surface map, and may activate the display 58, at any stage during the production of the virtual representation stored in the store 62 and during the surface map creation, to display an image of the object at the current stage.

During this process, the surface map creator 50 follows the steps shown in Figure 9, starting with step 900 in which the CPU 56 is prompted by the application 64 to enquire whether the 3D object exists in a digital form. If the answer is no, the process moves to step 902 and creates a digital 3D object, either from a physical object by scanning or digitising employing the 3D surface scanner 66 or the digitising arm 68, or by generating a CAD model employing the CAD system 74. The process then moves to step 904. On the other hand, if the outcome of step 900 is a yes, indicating that the original 3D object exists in digital form already, then the process moves directly to step 904.

In step 904, the process enquires whether a digital surface map of the object in the form of a triangulated mesh representation whose nodes are specified already exists. In some instances, the process of producing a digital object as already described will have created a digital representation including a digital surface map that is triangulated, but this will not always be the case. Accordingly, if the outcome of step 904 is a no, then the process moves to step 906 and generates a triangulated mesh surface representation and stores this in the store 62 by storing the parameters for each node of the triangulation. The process then progresses to step 908. Equally, if the outcome of step 904 is a yes, then the process progresses directly from step 904 to step 908.

In step 908, the CPU 56 enquires whether the resolution of the triangulation is appropriate to the level of detail required in the ultimate physical model. If the answer is no, the CPU 56 proceeds to step 910 and adjusts the resolution, either by performing a re-triangulation calculation or by reverting to a smooth surface representation and entering a new resolution for the conversion into a triangulated surface. The process then reverts to step 908 to enquire again whether an appropriate resolution has been achieved, and repeats this cycle until the answer to step 908 is yes. At this point, a digital form of a triangulated mesh surface representation, such as that shown in Figure 1, is now stored in store 62 for supply as an output in step 912.

Once a digital surface map in the form of a triangulated representation is stored in the surface map creator 50, input variables may be entered into the generator 52 for setting parameters for generating cutting instructions for producing the ultimate physical model. For this purpose, the generator 52 comprises an input device 76, a data processing unit 78, a memory 80, including a store 82, and optionally a display 84.

Such input variables serve for specifying certain general characteristics of the ultimate physical model, both with reference to the desired output dimensions for the model and with reference to the stock material from which the model will be formed. For example, parameters referring to the model height, the stock material thickness, and orientation, scaling and rotation may be entered. They are employed to generate text based instructions as a template representing control parameters for subsequently converting the digital surface map data stored in store 62 into slice cutting instructions.

In the present embodiment, such variables are manually entered by means of the input device 76, which may be a keyboard or an interactive section of the display 84, and are stored in the store 82. They may be entered directly, or they may be entered by selection from a menu offering ranges for such variables. The data processing unit 78 supplies the entered values as output as parameters to the slicing CAD unit 54, in the same way that the surface map creator 50 supplies the digital surface map in the form of the triangulated representation to the slicing CAD unit 54.

The slicing CAD unit 54 accordingly comprises a memory 86 including a store 88 for data from the surface map creator 50 and the generator 52, as well as an application 90 for creating a set of output instructions for controlling a cutting machine or apparatus for generating the slices for a physical model. In addition, the slicing CAD unit 54 has a CPU 92 for performing steps under the direction of the application 90, a control unit 94 and a display 96. The control unit 94 serves as an operator interface for activating the surface map creator 50 and the generator 52 to load data from these devices into the store 88. The CAD unit 54 thus receives the digital triangulated mesh representation from the surface map creator 50 and the input variables from the generator 52, and then combines such information to show on the display 96 a representation of the ultimate physical 3D model.

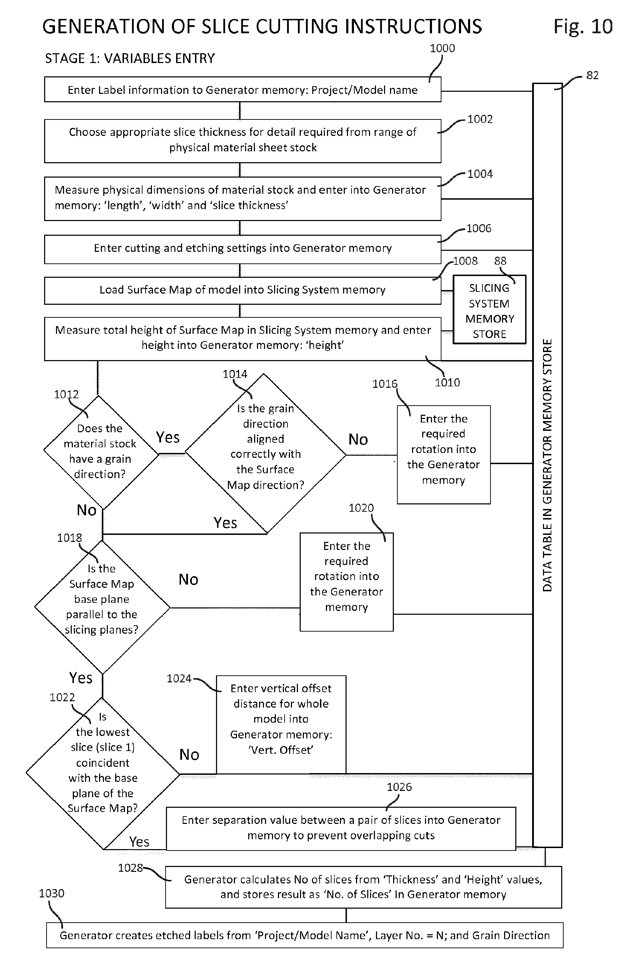

As described, the CAD model shown on the display 96 can be manipulated by input from the control unit 94 and can then be modified or refined by input through the surface map creator 50 and the generator 52 to finalise or fine tune the ultimate design and dimensions of the physical model. Once the final details are settled, the CPU 92 of the slicing design unit 54 acting in accordance with the application 90 generates a set of cutting instructions for output. The steps for generating the CAD model and producing final output instructions are shown in Figures 10 to 13 and will now be described.

Figure 10 is a flow chart of process steps performed primarily in the generator 52, in association with certain process steps that take place in the surface map creator 50 and the slicing CAD unit 54. For ease of understanding, Figure 10 shows certain hardware features associated with these steps, including the data store 82 in the generator 52, where a data table is compiled in the course of the process to be described, and the data store 88 in the slicing CAD unit 54, which stores data received from the surface map creator 50 and the generator 52.

The first step in Figure 10 is step 1000, representing operator entry by a design or control engineer, employing the input device 76, of designation information, such as a project or model name, and storage of the same in the store 82 of the memory 80. Next, in step 1002, the engineer inspects a range of available physical material sheet stock and selects specific sheet stock and an appropriate slice thickness for the physical 3D model based on such sheet stock. The engineer also enters into the store 82 of the store 82 of the memory 80 of the generator 52 by way of the input device 76 the physical dimensions of the selected sheet stock, such as length, width and thickness. This takes place in step 1004.

In step 1006, the engineer enters cutting and etching settings relevant to the material sheet stock that has been selected and the associated cutting machine required to cut it, for example the power of a laser beam and the speed of its travel needed to penetrate the stock material, into the store 82 of the memory 80 of the generator 52.

The next two subsequent steps are controlled by the application 90 in the slicing CAD unit 54 acting through the control unit 94 to activate, respectively, the surface map creator 50 and the generator 52. In step 1008, the slicing CAD unit 54 loads the digital triangulated mesh from the surface map creator 50 into the store 88 of the memory 86 in the slicing CAD unit 54 and displays it on the display 96. Under the control of the application 90 and the control unit 94, the CPU 92 next, in step 1010, measures the total height of the 3D object, represented by the digital surface map stored in the store 88, as a projected model height, and enters the measurement into the store 82 in the generator 52.

At this point, the application 90 prompts the CPU 92 to enquire in step 1012 whether the material stock has a grain direction. The engineer makes a visual inspection of the grain of the selected stock material and enters an answer into the input device 76. If the answer is yes, the process enquires in step 1014 whether the grain direction and the surface map direction are correctly aligned with one another. The engineer makes another visual inspection, between the grain of the selected stock material as it will be advanced through a cutting machine and the surface map displayed on display 96. If the answer is no, the process proceeds to step 1016 and the engineer causes an appropriate rotation to be entered into the store 82 in the generator 52. On the other hand, if the outcome of step 1014 is yes, the process proceeds to step 1018. The process also proceeds directly from step 1012 to step 1018 if the stock material has no grain direction.

In step 1018, the application 90 enquires of the engineer whether a base plane of the displayed digital surface map is parallel to the slicing planes envisaged for the digital layer objects. If the answer is no, the process proceeds to step 1020 and the engineer enters into the input device 76 and thence the store 82 in the generator 52 the rotation necessary to achieve a parallel situation. On the other hand, if a parallel situation exists already and the answer to step 1018 is yes, the process proceeds to step 1022 and prompts the CPU 92 to enquire of the engineer whether the lowest slice of the ultimate physical model is coincident with the base plane of the digital surface map. In the event that the answer is no, the process proceeds to step 1024 and the engineer enters into the input device 76 and supplies to the store 82 in the generator 52 a vertical offset distance measurement, 'Vert. Offset', to bring about coincidence. Should the outcome of step 1022 be yes, the process proceeds to step 1026 and asks the engineer to supply to the store 82 of the generator 52 a separation value, representing the gap needed between slices to prevent overlapping cuts.

The process now proceeds to step 1028 where the data processing unit 78 of the generator 52 calculates from the stored thickness and height values the number of slices that there will be in the ultimate physical model, and stores the result as 'No. of slices' in the store 82. The data processing unit 78 then in step 1030 creates and stores in store 82 the data for a series of etched labels for the different slices, showing respectively the 'Project/Model name' and the slice number N, N+1 etc.

A complete set of text instructions is now stored as a template in the store 82.

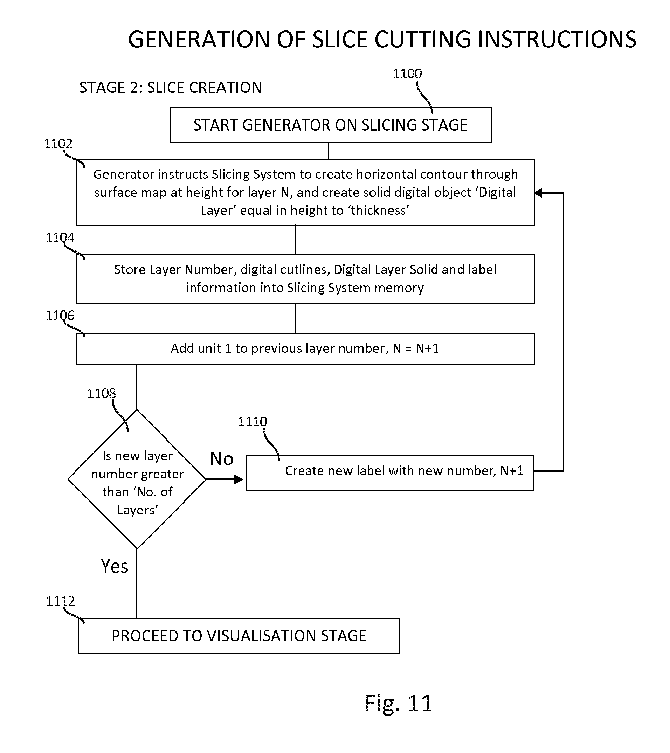

Next, the slicing CAD unit 54 begins the process of producing a set of digital layer objects as a representation of the set of physical slices needed to produce the physical model, such layer objects being generated by effectively slicing through the surface map stored in the surface map creator 50. For this purpose, the CPU 92 acting on the instructions of the application 90 performs the steps shown in Figure 11 commencing the production of the digital layer objects with step 1100. Initially, in step 1102, the control unit 94 activates the generator to supply the instructions stored in the memory 82 to the CAD unit 54, and the unit 54 creates a horizontal virtual contour through the digital surface map already stored in the store 88 and displayed on the display 96 at the height for layer N, starting at layer N=1. The unit 54 thus creates a digital layer object entitled "digital layer" representing a solid slice equal in height to a value given for "thickness" obtained from the data retrieved from the generator 52. The process proceeds to step 1104 and stores in store 88 all the digital information required for the label information, the layer number, cutlines for the eventual slice, and the digital layer.

In step 1106, the process adds 1 to the previous layer number, N, and proceeds to step 1108 and enquires whether the new layer number N+1 is now greater than the total number of layers, "number of layers". If the answer is yes, the process proceeds to step 1112 and the next stage. On the other hand, if the answer is no, the process proceeds to step 1110 and sets N = N+1, and then reverts to step 1102.

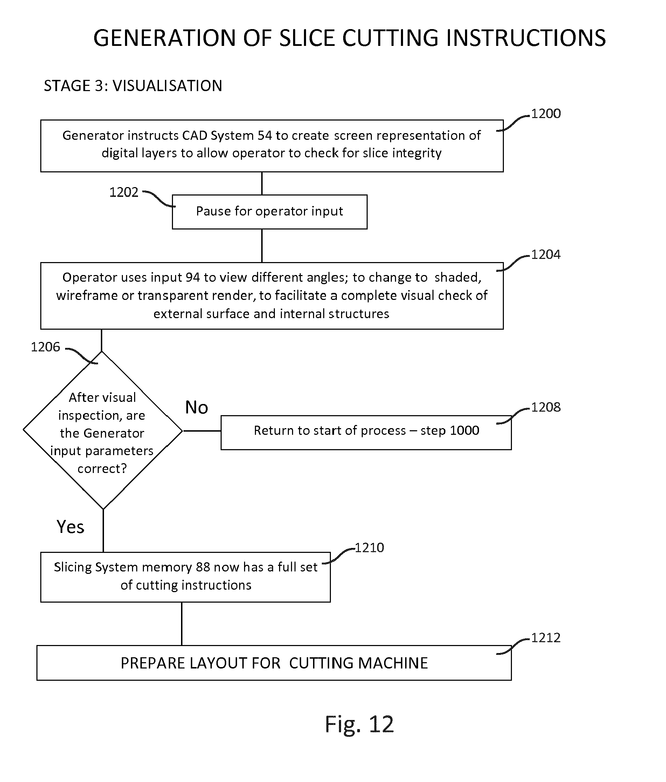

When digital layer objects have been created for every physical slice, and the information has been stored in the data store 88, the slicing CAD unit 54 creates a visual representation of the digital layer objects as a CAD model on the display 96. The steps for generating such visual representation are shown in Figure 12.

The production of the final instructions to be output by the slicing CAD unit 54 commences with step 1200, in which the control unit 94 instructs the slicing CAD unit 54, by means of the CPU 92 acting under the control of the application 90, to produce a representation of the digital layer objects on the display 96. In step 1202, a pause occurs for operator input. The operator or control engineer makes a visual check for layer integrity, and may input instructions either by way of the input device 76 in the generator 52 or by way of the control unit 94 in the slicing design unit 54. Such instructions may serve to control the representation of the CAD model shown on the display 96, to rotate the model for viewing it at different angles, or to render sections of the representation in shading or as a wire frame or as a transparent form, in order to effect a complete check of the integrity of the external shape and the internal support structures of the eventual physical 3D model. This takes place in step 1204. The process proceeds to step 1206 and prompts the CPU 92 to enquire whether the parameters stored in the store 88 are correct. If the answer is no, the process proceeds to step 1208 and adjustments are effected by returning to step 1000 and inputting updated values. On the other hand, if the answer to step 1206 is yes, the CPU 92 collects the full set of parameters for all the digital layer objects and the associated position data and converts these parameters to cutting instructions in step 1210 and stores them in the store 88. The process now proceeds to step 1212 to prepare a cutting layout for the cutting machine.

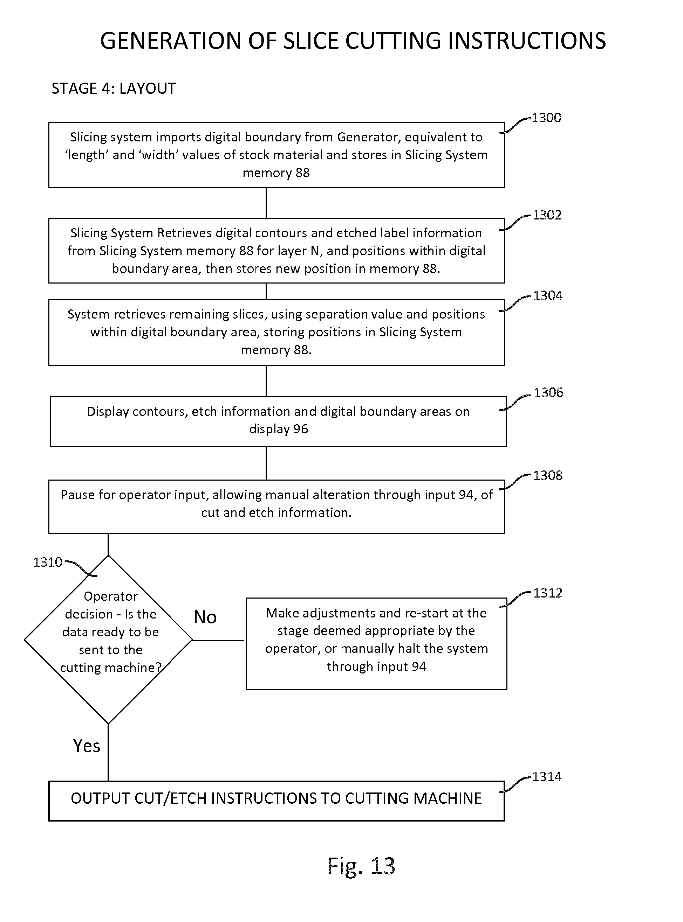

Figure 13 is a flowchart of the steps involved in the slicing CAD unit 54 for preparing the cutting layout, starting with step 1300. In step 1300, the slicing CAD unit 54 creates a digital boundary equivalent to the "length" and "width" values for stock material, previously stored in the generator 52 and transferred in step 1102 to the store 88, and stores such data in the data store 88. The process proceeds to step 1302 and retrieves from the store 88 the digital data representing cutlines and etched label information for digital layer N and situates this within the boundary area created in step 1300. The resulting data is stored in the slicing CAD unit store 88. In step 1304, the slicing CAD unit 54 retrieves the data concerning the remaining digital layer objects from the store 88 and positions them also within the boundary area, using the previously stored separation values, and stores the position information relative to the digital boundary area in the store 88 of the slicing CAD unit 54.

In step 1306, the slicing CAD unit 54 displays on the display 96 a representation of the digital boundary area carrying cutlines and etch label information. In step 1308, the operator is given an opportunity for further input to effect adjustment of the cutlines and etch information, through the control unit 94 of the slicing CAD unit 54.

The process proceeds to step 1310, when the CPU 92 enquires whether the data is yet ready to be sent to the cutting machine. If the answer is no, the process advances to step 1312, and either the engineer makes the necessary adjustments and/or reverts to an appropriate earlier step and/or the engineer manually halts the process through the control unit 94. On the other hand, if the answer is yes, the process proceeds to step 1314 and provides as output a set of instructions to the cutting machine.

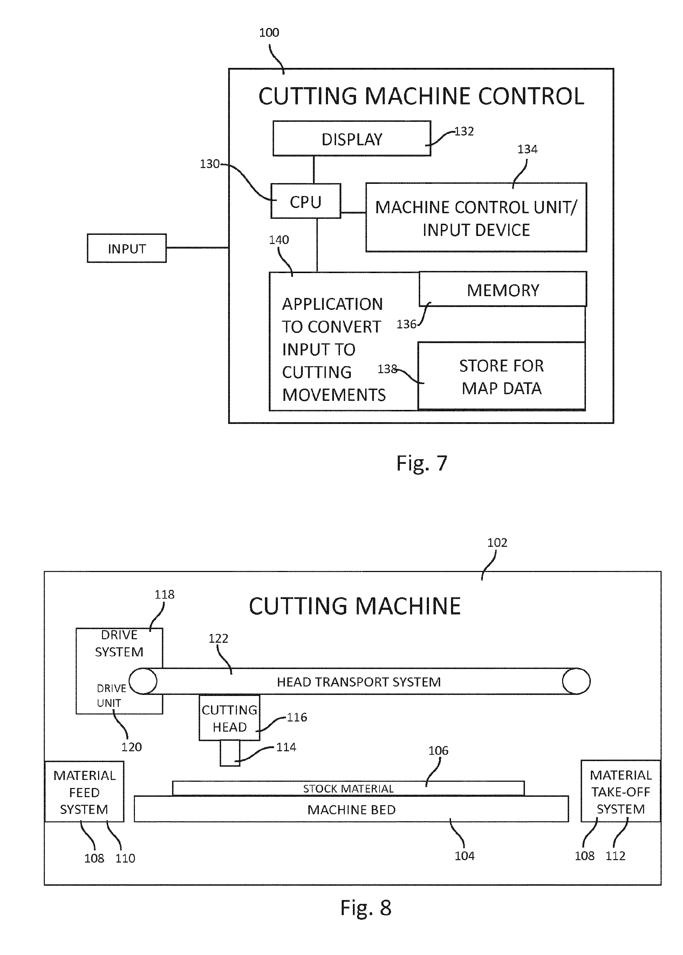

The apparatus for actually producing physical slices for assembly into a physical 3D model is shown in Figures 7 and 8, and comprises a control system 100 forming part of a cutting machine 102. The cutting machine 102, shown in Figure 8, comprises a machine bed 104 for receiving sheets of stock material 106, in this instance card, and a feed system 108 having an upstream section 110 for depositing a sheet of the card stock material 106 on the machine bed 104, and a downstream section 112 for removing the sheet of card stock material 106 from the machine bed 104. The deposited sheet 106 is un-marked, and the removed sheet 106 has cut therefrom the slices shown in Figure 3 with the position and orientation markers etched thereon.

A laser cutting head 114 is displaceably supported above the machine bed 104 by way of a carriage 116 moveable in X-Y directions. A drive system 118 for the carriage 116 includes a drive unit 120 and a conveyor belt arrangement 122 as illustrated. The illustrated elements represent the facility of the drive system 118 for moving the carriage 116 in the X direction, and similar elements (not shown) serve in the drive system 118 for effecting movement of the carriage 116 in the Y direction.

The control system 100 includes a CPU 130, a display 132 and a machine control unit 134 for operating the drive unit 120. A memory 136 stores an application 140 for converting the instructions received from the slicing CAD unit 54 into cutting movements supplied to the control unit 134 to activate the drive system 118 and the cutting head 114.

The cutting machine control system 100 responds to the instructions received from the slicing CAD unit 54 by controlling the drive unit 120 and the laser head 114 to create cutlines and etched labels on the stock material 106. Once the cutting machine has completed the cutlines and etched labels on the stock material 106, corresponding to the situation shown in Figure 3, the slices can be removed from the stock material and are ready for the final assembly of the physical 3D model.

For this purpose, the slices shown in Figure 3 are carefully assembled in order as shown. Each slice has a central square opening 16 for receiving a main support column, and an arrow 20 indicating the grain direction of the stock material and the orientation of the slice with respect to the central support column.

As shown, a number of the slices also have further circular openings 18, for receiving additional rod supports for increased structural integrity and for orientation purposes.

Optionally, certain slices may also have applied thereto at this stage, small clamping magnets 22, for example for clamping certain adjacent slices together for transport purposes.

The model is manually assembled by slotting the slices consecutively onto the main central support or support column in the present embodiment, although it is envisaged that an automated assembly process would be viable.

The present invention has been described with respect to one particular example, but it is envisaged that numerous modifications are possible.

For example, the described embodiment features various steps performed manually by the engineer following visual inspection. It is equally possible that such steps may be automated. Thus, the whole process may be automated, or only certain steps within the process may be automated. In either event, the level of automation ensures that 3D models, either virtual or physical, but especially physical, may be produced rapidly and efficiently, and that the production process may be repeated as often as desired, to commercial standards on each occasion.

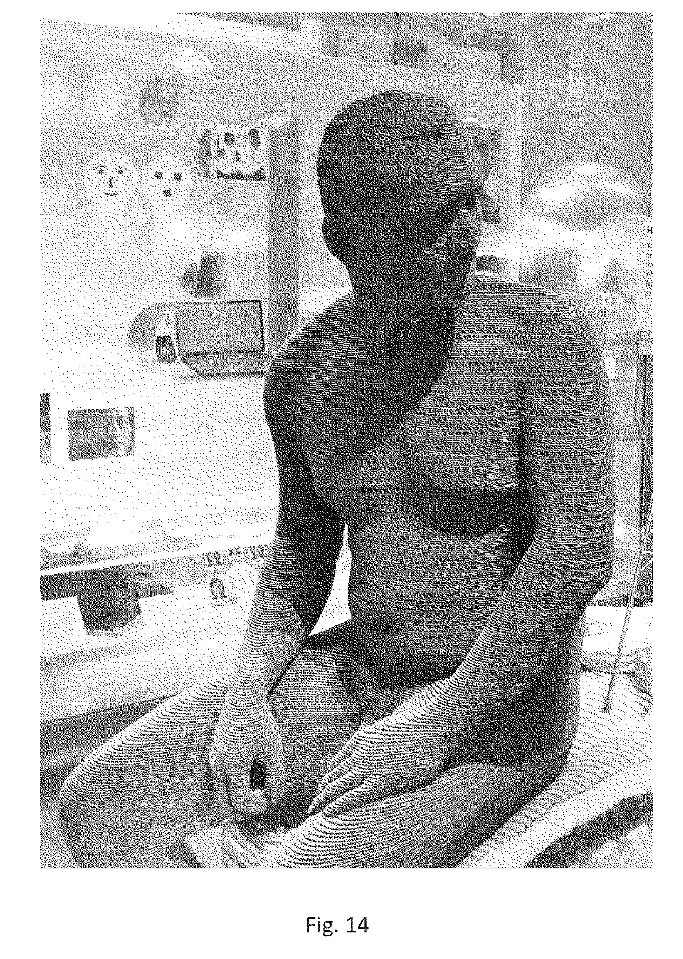

Further, the described embodiment features a 3D physical model of a human head but significantly more complex models may be achieved. One such example is shown in Figure 14, and comprises a seated figure of a man. In this instance, it will be appreciated that the model data and cutting instructions can be generated precisely as already described but employing significantly more complex instructions and orientation parameters.

The described embodiment envisages employing stock material in the form of card for the model, and a laser cutting machine for producing the slices to be assembled into the model. Other types of sheet material can equally well be used with appropriate selection of a cutting machine. For example, a water cutting arrangement may be used for metal, or a heat cutting arrangement may be used for plastics.

It is additionally possible, instead of employing a cutting machine, to form the slices by a moulding process. In all of these cases, the production of the instructions for the slice forming machine will remain substantially the same.

## Claims

1. A method for producing a 3D model, comprising the steps of:
creating a digital surface map of a 3D object,
based on the digital surface map generating digital layer objects representing slices through the 3D object, the digital layer objects including data representing markers for designating the relationship of the slices with respect to one another,
based on the digital layer objects producing a set of instructions for controlling a slicing machine, and
providing a control output derived from the instructions for supply to the slicing machine.

2. A method according to claim 1, wherein the step of creating comprises forming a triangulated surface map, and storing data representing the nodes of said surface map.

3. A method according to claim 1 or 2, wherein the step of generating comprises inputting control variables relating to the final 3D model, and combining such variables with the digital surface map for producing a virtual model.

4. A method according to claim 3, wherein the step of generating comprises inputting further control variables relating to stock material from which a physical version of the 3D model will be produced, and combining such variables with data concerning the virtual model.

5. A method according to claim 3 or 4, wherein the step of generating comprises forming slices through the virtual model to produce the digital layer objects.

6. A method according to claim 3, 4 or 5, wherein the step of generating comprises forming and manipulating a visual representation of the 3D model.

7. A method according to any preceding claim, wherein the step of producing instructions comprises creating a digital layout of digital layer objects on a boundary area representing stock material for providing physical slices for assembling a physical model.

8. Apparatus for producing a 3D model comprising:
a surface map creator for creating a digital surface map of a 3D object, and
a digital slicing system responsive to an output from the surface map creator for generating digital layer objects representing slices through the 3D object, the digital layer objects including data representing markers for orienting individual slices with respect to one another, the slicing system being adapted for producing slice forming instructions based on the digital layer objects for controlling a slice forming machine and providing a control output derived from said instructions.

9. Apparatus according to claim 8, wherein the surface map creator comprises means for forming a triangulated surface map, and a store for data representing the nodes of said surface map.

10. Apparatus according to claim 8 or 9, wherein the digital slicing system comprises a generator including an input for control variables relating to the final 3D model, and means for combining such variables with the digital surface map for producing a virtual model.

11. Apparatus according to claim 10, wherein the digital slicing system comprises the or a further input for further control variables relating to stock material from which a physical version of the 3D model will be produced, and means for combining such further variables with data concerning the virtual model.

12. Apparatus according to claim 10 or 11, wherein the digital slicing system comprises means for forming slices through the virtual model to produce the digital layer objects.

13. Apparatus according to claim 10, 11 or 12, wherein the digital slicing system comprises a display and means for forming and manipulating on the display a visual representation of the 3D model.

14. Apparatus according to any of claims 8 to 13, comprising means for creating a digital layout of digital layer objects on a boundary area representing stock material for providing physical slices for assembling a physical model.

15. A method for producing a physical 3D model, comprising the steps of:
inputting control data to a slice forming machine for producing slices in sheet form,
controlling a slice forming machine according to the control data to produce a series of slices representing successive layers of the 3D model and to provide on respective slices markers for locating and orienting adjacent slices with respect to one another,
assembling the slices by successively mounting the slices in the order of the successive layers on a spinal column, and
orientating the slices relative to one another by reference to the location markers.

16. A method according to claim 15, wherein the step of controlling comprises controlling a cutting machine to cut slices from sheet stock material.

17. A method according to claim 16, wherein the step of cutting is effected by one of the following: laser cutting, water jet cutting, heat slicing, sawing.
